# EUROPEAN PATENT APPLICATION

(11) **EP 4 376 268 A1**
(43) Date of publication of application: **29.05.2024**
(21) Application number: 22845458.3
(22) Date of filing: 22.07.2022
(51) Int. Cl.: H02K 3/28, H02K 3/04, H02K 3/12

(54) **FLAT-WIRE WAVE WINDING WIRE, POLYPHASE ELECTRIC MOTOR AND THREE-PHASE ELECTRIC MOTOR**

(30) Priority: 23.07.2021 CN 202110838221
(71) Applicant: XPT (Nanjing) E-powertrain Technology Co., Ltd., Longtan Township Qixia District, Nanjing City Jiangsu 210046 (CN)
(72) Inventor: HONG, Wei, Nanjing, Jiangsu 210046 (CN); LAN, Hongyu, Nanjing, Jiangsu 210046 (CN); BI, Lu, Nanjing, Jiangsu 210046 (CN)
(74) Representative: Vossius & Partner Patentanwälte Rechtsanwälte mbB
(86) International application number: PCT/CN2022/107447
(87) International publication number: WO 2023/001295

(57) **Abstract**

A flat-wire wave winding, a multi-phase motor and a three-phase motor are disclosed. The flat-wire wave winding is applied in a multi-phase motor, wherein the multi-phase motor has a pole pitch, the multi-phase motor includes a stator, and the stator has a plurality of stator slots, each of the stator slots including an open end, an even number of wire layer positions being defined in each of the stator slots, and the wire layer positions including a first wire layer position farthest from the open end and a last wire layer position closest to the open end. The flat-wire wave winding includes a first coil including a first formed wire and a third formed wire; and a second coil including a second formed wire and a fourth formed wire.

## Description

### Technical Field

The disclosure relates to a flat-wire wave winding, and in particular to a flat-wire wave winding for a motor, a multi-phase motor and a three-phase motor.

### Background Art

New energy vehicles use a motor as their main power source. The motor has a stator and a rotor, and generates power by means of an electromagnetic effect between the stator and the rotor. Flat wire windings of existing stators mainly include Hairpin windings or I-pin windings which both require a lot of bending and welding of wires. The occurrence of damages during production would impair the conductivity of a winding and the overall performance of a motor.

### Summary

The disclosure provides a flat-wire wave winding and a forming method thereof to solve the above problems.

The disclosure discloses a flat-wire wave winding applied in a multi-phase motor, wherein the multi-phase motor has a pole pitch, the multi-phase motor includes a stator, and the stator has a plurality of stator slots, each of the stator slots including an open end, an even number of wire layer positions being defined in each of the stator slots, and the wire layer positions including a first wire layer position farthest from the open end and a last wire layer position closest to the open end. The flat-wire wave winding includes a first coil including a first formed wire and a third formed wire; and a second coil including a second formed wire and a fourth formed wire.

The disclosure further discloses a multi-phase motor having a pole pitch. The multi-phase motor includes a rotor located at the center of the multi-phase motor and including a plurality of pole pairs; a stator having a lead-out side and a non-lead-out side, the stator including a plurality of stator slots, each stator slot having an open end facing the rotor, an even number of wire layer positions being defined in each of the stator slots, a wire layer position farthest from the open end being a first wire layer position, and a wire layer position closest to the open end being a last wire layer position; and a flat-wire wave winding including a plurality of coils, each of the coils being composed of two formed wires, each of the formed wires including a plurality of linear wire sections and a plurality of bridge sections each connecting two adjacent linear wire sections, the linear wire sections including a lead-out wire segment, a connecting wire segment and a plurality of linear wire segments, wherein the flat-wire wave winding is placed in the stator according to a winding rule.

The disclosure further discloses a three-phase motor, including a rotor having four pole pairs; a stator including forty-eight stator slots numbered #1-48#, wherein each stator slot has an open end facing the rotor, and eight wire layer positions are defined in each of the stator slots, the wire layer positions being numbered L1-L8 in sequence from the one furthest from the open end to the one closest to the open end; and a flat-wire wave winding including: a first coil and a third coil each including a first formed wire and a third formed wire; and a second coil and a fourth coil each including a second formed wire and a fourth formed wire; wherein each of the first formed wire, the second formed wire, the third formed wire and the fourth formed wire includes sixteen linear wire sections and fifteen bridge sections each for connecting two adjacent linear wire sections.

### Brief Description of the Drawings

FIG. 1 is a schematic diagram of a flat-wire wave winding according to an embodiment of the disclosure;
FIG. 2A is a schematic diagram of a flat-wire wave winding of the disclosure that is spread;
FIG. 2B is a top view of a flat-wire wave winding of the disclosure viewed from the side of a stator;
FIG. 3 is a schematic diagram of the shape of a first formed wire of a flat-wire wave winding according to an embodiment of the disclosure;
FIG. 4 is a schematic structural diagram of a first formed wire in a stator according to an embodiment of the disclosure;
FIG. 5 is a top view of the structure of a first formed wire in a stator according to an embodiment of the disclosure;
FIG. 6 is a schematic diagram of the shape of a second formed wire of a flat-wire wave winding according to an embodiment of the disclosure;
FIG. 7 is a schematic structural diagram of a second formed wire in a stator according to an embodiment of the disclosure;
FIG. 8 is a schematic diagram of the shape of a third formed wire of a flat-wire wave winding according to an embodiment of the disclosure;
FIG. 9 is a schematic structural diagram of a third formed wire in a stator according to an embodiment of the disclosure;
FIG. 10 is a schematic diagram of the shape of a fourth formed wire of a flat-wire wave winding according to an embodiment of the disclosure;
FIG. 11 is a schematic structural diagram of a fourth formed wire in a stator according to an embodiment of the disclosure;
FIG. 12 is a schematic diagram of a first pair of spread formed wires according to an embodiment of the disclosure;
FIG. 13 is a schematic view of a second pair of spread formed wires according to an embodiment of the disclosure;
FIG. 14A is a schematic diagram of a first coil according to an embodiment of the disclosure;
FIG. 14B is a another schematic diagram of a first coil according to an embodiment of the disclosure;
FIG. 15 is a schematic diagram of a second coil according to an embodiment of the disclosure;
FIG. 16 is a schematic diagram of a winding structure of a flat-wire wave winding in a stator according to an embodiment of the disclosure;
FIG. 17 is a schematic diagram of a winding structure of a flat-wire wave winding in a stator according to another embodiment of the disclosure;
FIG. 18A is a schematic diagram of a stator and stator slots according to an embodiment of the disclosure; and
FIG. 18B is a schematic diagram of the wire layer positions in a stator slot according to an embodiment of the disclosure;

List of reference signs:
1: Stator
10: Flat-wire wave winding
12: Stator slot
20: Lead-out side
30, 60, 80, 100: First formed wire
120: First pair of formed wires
130: Second pair of formed wires
301, 601, 801, 1001: Lead-out wire segment
316, 616, 816, 1016: Connecting wire segment
302-315, 602-615, 802-815, 1002-1015: Linear wire segment
401-415, 701-715, 901-915, 1101-1115: Bridge section
350, 650, 850, 1050: Connecting end
360, 660, 860, 1060: Lead-out end
L1-L8: Wire layer position
U1, U2, U3, U4: Coil

### Detailed Description of Preferred Embodiments

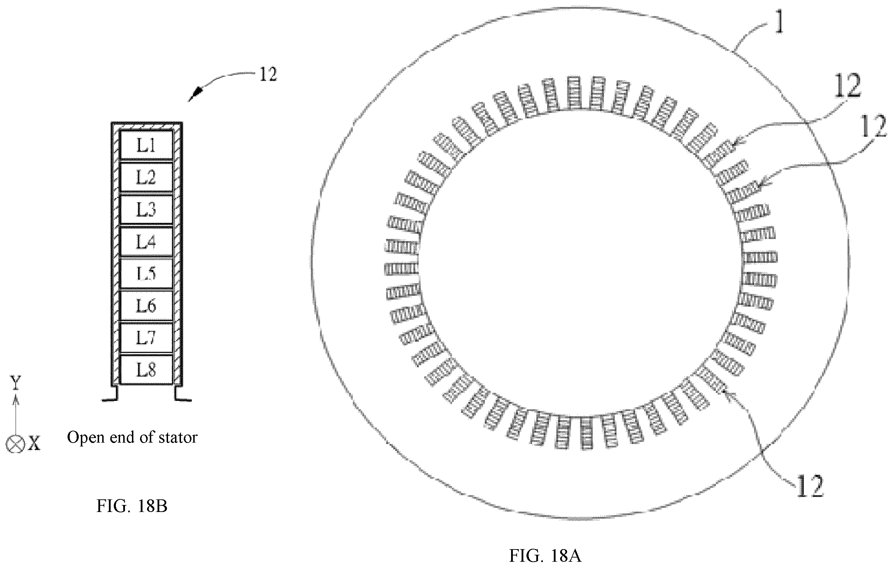

FIGS. 18A and 18B respectively show schematic diagrams of a stator, stator slots and wire layers according to an embodiment of the disclosure. As shown in FIG. 18A, the stator 1 according to the embodiment of the disclosure includes a plurality of stator slots 12, and open ends of the stator slots 12 face a rotor (not shown in the figure). As shown in FIG. 18B, a plurality of wire layer positions are defined in each stator slot 12 so that the flat-wire wave winding of the disclosure can be placed therein. Although eight wire layers L1-L8 are exemplified in FIG. 18B, the disclosure is applicable to any embodiment in which an even number of wire layers are provided and is not limited to eight layers.

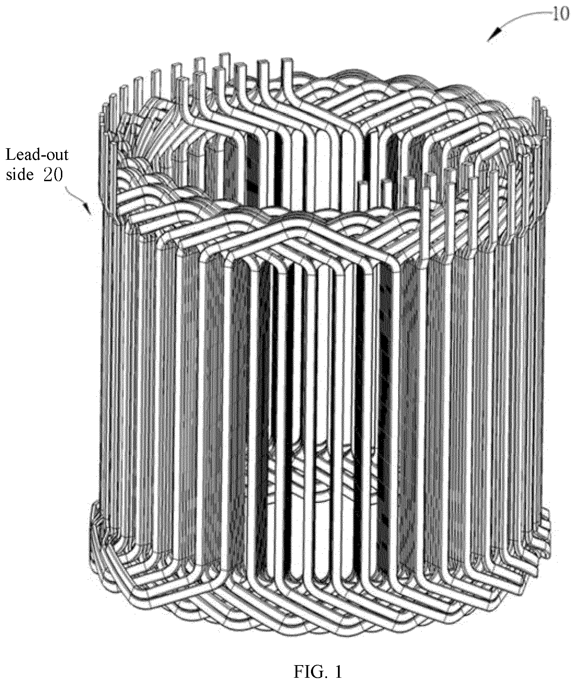

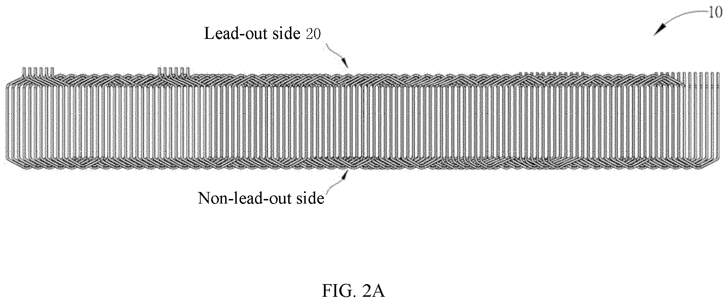

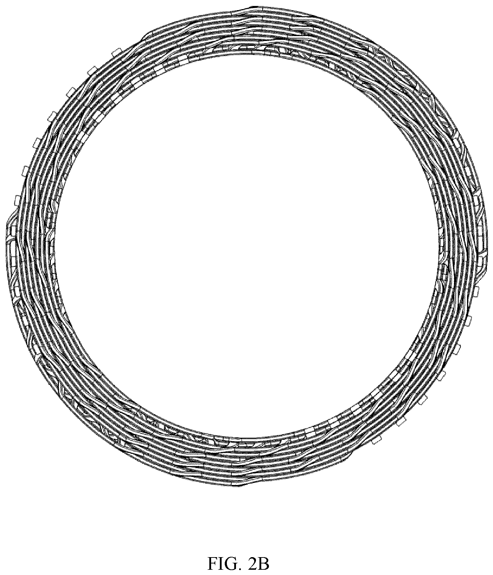

Referring to FIGS. 1, 2A and 2B, FIG. 1 is a schematic diagram of a flat-wire wave winding 10 according to an embodiment of the disclosure, FIG. 2A is a schematic structural diagram of the flat-wire wave winding 10 that is spread, and FIG. 2B is a top view of the flat-wire wave winding 10 viewed from the side of the stator 1. As shown, the flat-wire wave winding 10 of the disclosure is composed of a plurality of integrally formed wires, and each formed wire includes a plurality of linear wire sections and a plurality of bridge sections. Also as shown, the flat-wire wave winding 10 of the disclosure may be bent into a desired shape on a tooling, and then pushed into a corresponding stator slots 12 in wire layer positions through the open ends of the stator slots 1. In an embodiment, lead-out wires of the flat-wire wave winding 10 of the disclosure are concentrated on a lead-out side 20 of the stator. In addition,the number of parallel paths for currents per phase are not limited in the flat-wire wave winding 10 of the disclosure. A designer can design a coil of the flat-wire wave winding 10 as a stator winding with one, two or four paths connected in parallel according to actual needs.

In an embodiment, the flat-wire wave winding 10 of the disclosure can be applied in a multi-phase motor. The number of the stator slots of the multi-phase motor is (2*n), (2*k) wire layer positions are defined in each stator slot, and the number of pole pairs of the rotor is p, where (2*k) is an even number not less than 4. Based on the above assumptions, a pole pitch D of the multi-phase motor in the embodiment of the disclosure can be expressed as: D = (2*n)/(2*p). In addition, the number of phases per pole can be expressed as: (D/number of phases). For example, it is assumed that a three-phase motor includes forty-eight stator slots (n = 24), eight wire layer positions are defined in each stator slot (k = 4), and the rotor includes four pole pairs (p = 4). According to this embodiment, the pole pitch D of the three-phase motor is 6, and the number of phases per pole is 2. In order to clearly set out the spirit of the disclosure, the following description of the flat-wire wave winding is made with reference to the embodiment of this three-phase motor with forty-eight stator slots as an example, unless expressed in algebra.

As shown in FIGS. 1 and 2A, the flat-wire wave winding 10 according to the embodiment of the disclosure includes a plurality of coils, which occupy the stator slots 12 and the wire layer positions in sequence. In an embodiment, each coil is composed of at least one formed wire. The formed wire includes a plurality of linear wire sections and a plurality of bridge sections. The linear wire sections include a lead-out wire segment, a connecting wire segment, and a plurality of linear wire segments. In addition, an end of the lead-out wire segment includes a lead-out end, and an end of the connecting wire segment includes a connecting end, wherein the lead-out end and the connecting end are located on the lead-out side 20 of the stator 1. Each of the bridge sections is used to connect two adjacent linear wires. The bridge sections may be divided into lead-out side bridge sections on the lead-out side 20 of the stator and non-lead-out side bridge sections not on the lead-out side 20 of the stator.

In an embodiment, the number of linear wire sections (including the lead-out wire segment, the connecting wire segment, and linear wire segments) and the number of bridge sections of a formed wire may be designed depending on the number of stator slots and the number of phases of a motor. By way of example, for a three-phase motor including forty-eight stator slots, each formed wire may be designed as a formed wire including sixteen linear wire sections (i.e., 16 = 48/3) and fifteen bridge sections (i.e., 15 = 16-1). Although the numbers of linear wire sections and bridge sections are not defined in the disclosure, in an actual design, at least four or more linear wire sections and three or more bridge sections may provide better effects.

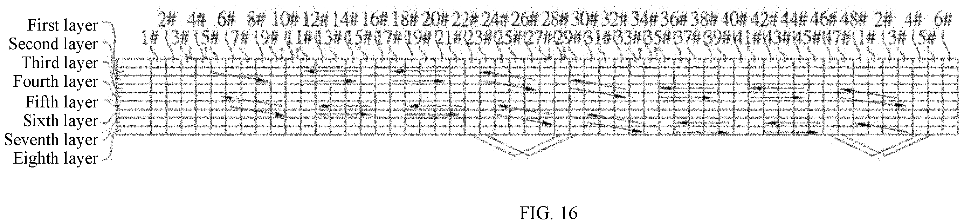

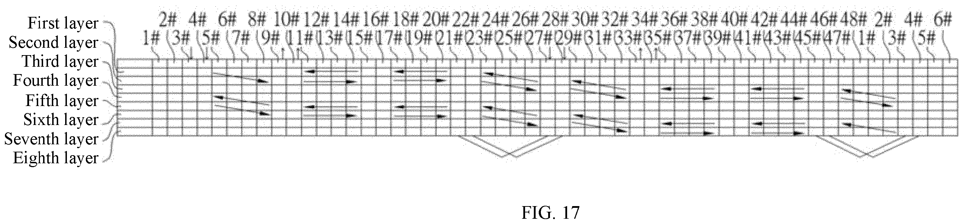

FIGS. 16 and 17 are schematic diagrams of two possible winding structure configurations of the flat-wire wave winding 10 of the disclosure in a stator. As shown, in an embodiment, the stator 1 may include forty-eight stator slots sequentially numbered 1# - 48#, and eight wire layer positions L1-L8 are defined in each stator slot. Among them, L1 is the outermost ring of wire layer positions, and L8 is the innermost ring of wire layer positions close to the open ends of the stator slots.

The flat-wire wave winding 10 of the disclosure is composed of a plurality of coils. As shown, in an embodiment, the flat-wire wave winding 10 of the disclosure includes a plurality of first coils U1, a plurality of second coils U2, a plurality of third coils U3, and a plurality of fourth coils U4. Each coil includes at least one formed wire, which fills the stator slots and the wire layers according to winding rules for the flat-wire wave winding 10 of the disclosure (FIG. 16 or 17). In addition, at least one of the first coils U1, at least one of the second coils U2, at least one of the third coils U3 and at least one of the fourth coils U4 together form a phase winding. Details of the winding rules for flat-wire wave winding 10 will be discussed in subsequent paragraphs.

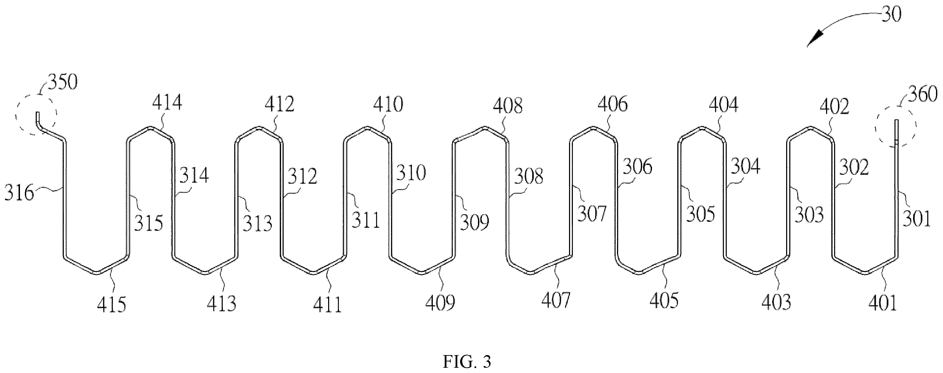

The flat-wire wave winding 10 of the disclosure may include a plurality of formed wires of different shapes. In an embodiment, the flat-wire wave winding 10 of the disclosure is composed of four different shapes of formed wires, as shown in FIGS. 3, 6, 8 and 10 respectively. Taking the embodiment of a three-phase motor with forty-eight stator slots as an example, as shown, a formed wire of each shape may include sixteen linear wire sections (forty-eight stator slots/three phases) and fifteen bridge sections. However, the disclosure is not limited to this. The following description is made taking a three-phase motor with forty-eight stator slots as an example.

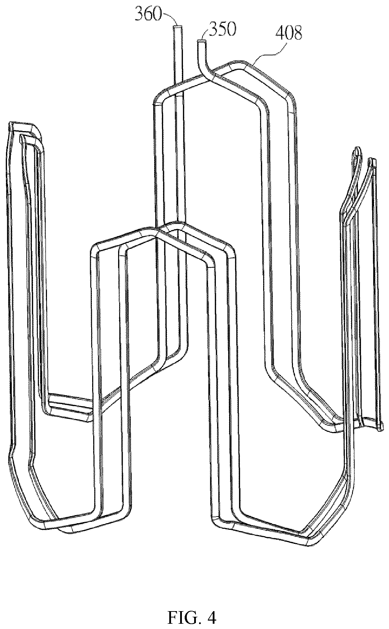

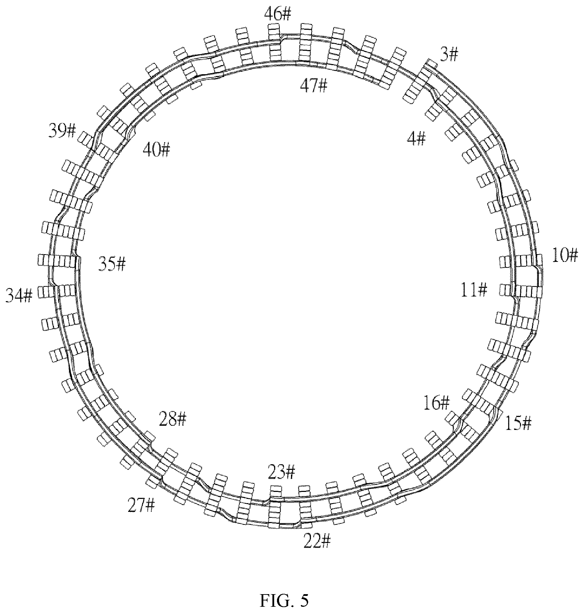

Referring to FIGS. 3, 4 and 5, FIG. 3 is a schematic diagram of the shape of a first formed wire 30 of the disclosure, FIG. 4 is a schematic structural view of the first formed wire 30 in a stator, and FIG. 5 is a top view of the structure of the first formed wire 30 according to the winding rules of FIG. 16.

As shown in FIG. 3, the first formed wire 30 includes a plurality of linear wire sections 301-316 and a plurality of bridge sections 401-415. The linear wire sections include a lead-out wire segment 301, a connecting wire segment 316, and a plurality of linear wire segments 302-315. As shown in FIG. 5, the linear wire sections 301-316 of the first formed wire 30 each occupy a specific stator slot and a specific wire layer position according to a winding rule of the disclosure. In addition, the lead-out wire segment 301 includes a lead-out end 360, and the connecting wire segment 316 includes a connecting end 350. The lead-out end 360 and the connecting end 350 are located on the lead-out side of the stator. Each of the bridge sections 401-415 connects adjacent linear wires. By way of example, the bridge section 401 connects the lead-out wire segment 301 and the linear wire segment 302, the bridge section 402 connects the linear wire segments 302 and 303, and the bridge section 415 connects the linear wire segment 315 and the connecting wire segment 316, and so on. The bridge sections 401, 403, 405, 407, 409, 411, 413 and 415 are located on the non-lead-out side of the stator, and the bridge sections 402, 404, 406, 408, 410, 412 and 414 are located on the lead-out side of the stator. A distance between two adjacent linear segments of the first formed wire 30 may be one of a first span, a second span or a third span. This is explained further in subsequent paragraphs. According to an embodiment, referring to FIG. 3, a first formed wire 30 may include sixteen linear wire sections (forty-eight stator slots/three phases) and fifteen bridge sections. However, the disclosure is not limited to this.

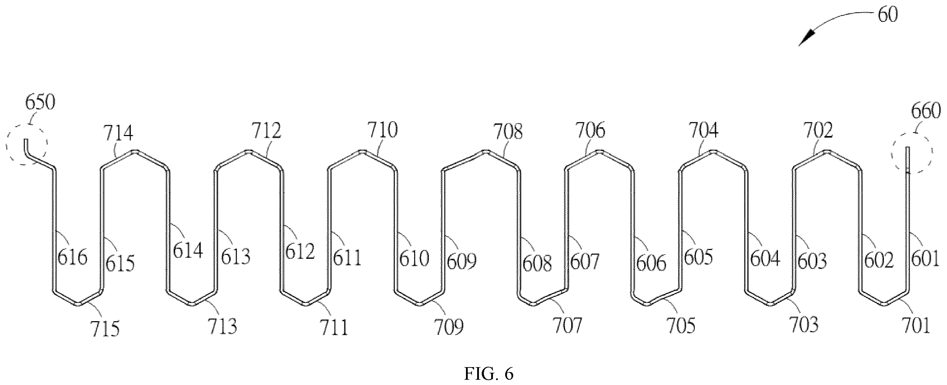

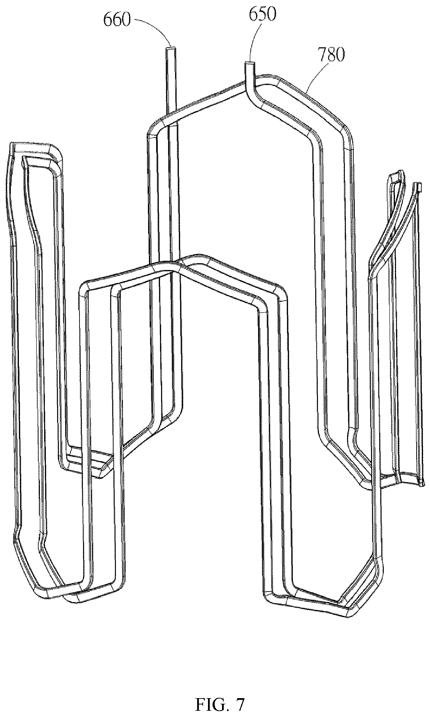

Referring to FIGS. 6 and 7, FIG. 6 is a schematic diagram of the shape of a second formed wire 60, and FIG. 7 is a schematic structural view of the second formed wire 60 in a stator. As shown in FIG. 6, the second formed wire 60 includes a plurality of linear wire sections 601-616 and a plurality of bridge sections 701-715. The linear wire sections include a lead-out wire segment 601, a connecting wire segment 616, and a plurality of linear wire segments 602-615. These linear wire sections each occupy a specific stator slot and a specific wire layer position according to a winding rule of the disclosure. In addition, the lead-out wire segment 601 includes a lead-out end 660, and the connecting wire segment 616 includes a connecting end 650. The lead-out end 660 and the connecting end 650 are located on the lead-out side of the stator. Each of the bridge sections 701-715 connects adjacent linear wires. By way of example, the bridge section 701 connects the lead-out wire segment 601 and the linear wire segment 602, the bridge section 702 connects the linear wire segments 602 and 603, and the bridge section 715 connects the linear wire segment 615 and the connecting wire segment 616. The bridge sections 701, 703, 705, 707, 709, 711, 713 and 715 are located on the non-lead-out side of the stator, and the bridge sections 702, 704, 706, 708, 710, 712 and 714 are located on the lead-out side of the stator. A distance between two adjacent linear segments of the second formed wire 60 may be one of a first span, a second span, or a fourth span. This is explained further in subsequent paragraphs. According to an embodiment, referring to FIG. 6, each second formed wire 60 may include sixteen linear wire sections (forty-eight stator slots/three phases) and fifteen bridge sections. However, the disclosure is not limited to this.

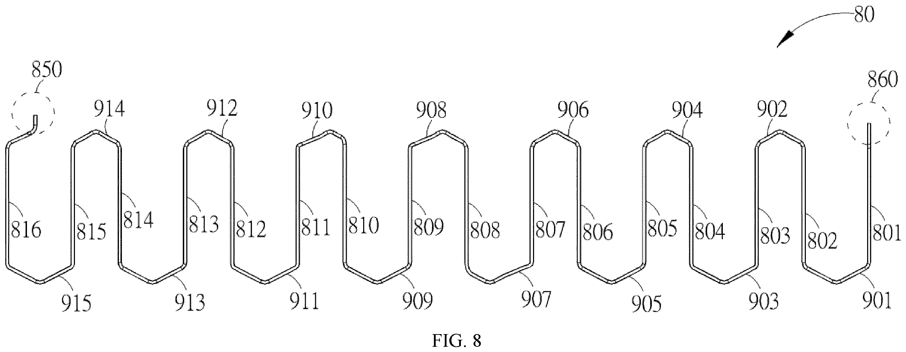

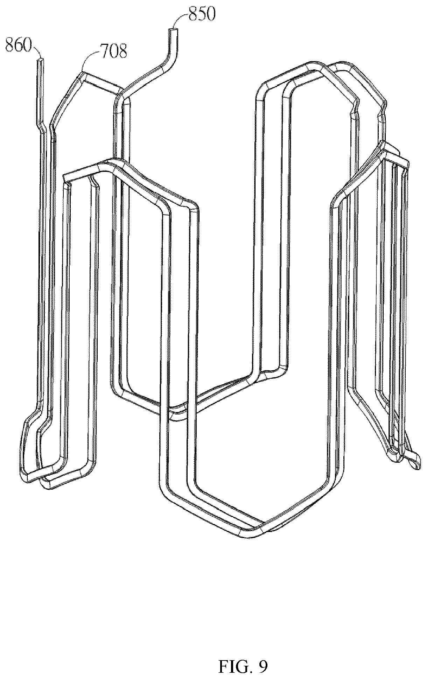

Referring to FIGS. 8 and 9, FIG. 8 is a schematic diagram of the shape of a third formed wire 80, and FIG. 9 is a schematic structural view of the third formed wire 80 in a stator. The third formed wire 80 has a similar structure to the first formed wire 30 shown in FIG. 3, except that the connecting end is bent in a different direction. As shown in FIG. 8, the third formed wire 80 includes a plurality of linear wire sections 801-816 and a plurality of bridge sections 901-915. The linear wire sections include a lead-out wire segment 801, a connecting wire segment 816, and a plurality of linear wire segments 802-815. These linear wire sections each occupy a specific stator slot and a specific wire layer position according to a winding rule of the disclosure. In addition, the lead-out wire segment 801 includes a lead-out end 860, and the connecting wire segment 816 includes a connecting end 850. The lead-out end 860 and the connecting end 850 are located on the lead-out side of the stator. Each of the bridge sections 901-915 connects adjacent linear wires. By way of example, the bridge section 901 connects the lead-out wire segment 801 and the linear wire segment 802, the bridge section 902 connects the linear wire segments 802 and 803, and the bridge section 915 connects the linear wire segment 815 and the connecting wire segment 816. The bridge sections 901, 903, 905, 907, 909, 911, 913 and 915 are located on the non-lead-out side of the stator, and the bridge sections 902, 904, 906, 908, 910, 912 and 914 are located on the lead-out side of the stator. A distance between two adjacent linear segments of the third formed wire 80 may be one of a first span, a second span or a third span. This is explained further in subsequent paragraphs. According to an embodiment, referring to FIG. 8, each third formed wire 80 may include sixteen linear wire sections (forty-eight stator slots/three phases) and fifteen bridge sections. However, the disclosure is not limited to this.

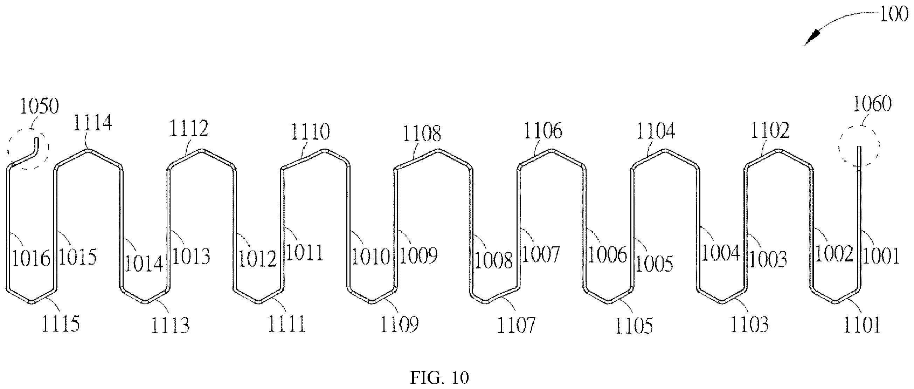

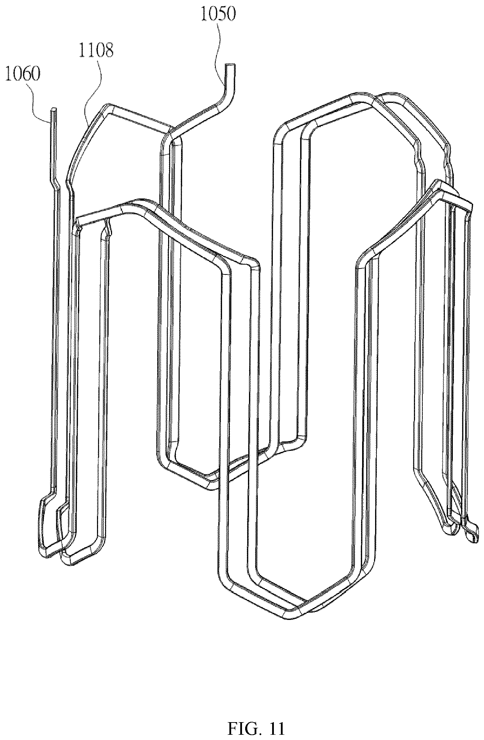

Referring to FIGS. 10 and 11, FIG. 10 is a schematic diagram of the shape of a fourth formed wire 100, and FIG. 11 is a schematic structural view of the fourth formed wire 100 in a stator. The fourth formed wire 100 has a similar structure to the second formed wire 60 shown in FIG. 6, except that the connecting end is bent in a different direction. As shown in FIG. 10, the fourth formed wire 100 includes a plurality of linear wire sections 1001-1016 and a plurality of bridge sections 1101-1115. The linear wire sections include a lead-out wire segment 1001, a connecting wire segment 1016, and a plurality of linear wire segments 1002-1015. These linear wire sections each occupy a specific stator slot and a specific wire layer position according to a winding rule of the disclosure. In addition, the lead-out wire segment 1001 includes a lead-out end 1060, and the connecting wire segment 1016 includes a connecting end 1050. The lead-out end 1060 and the connecting end 1050 are located on the lead-out side of the stator. Each of the bridge sections 1101-1115 connects adjacent linear wires. By way of example, the bridge section 1101 connects the lead-out wire segment 1001 and the linear wire segment 1002, the bridge section 1102 connects the linear wire segments 1002 and 1003, and the bridge section 1115 connects the linear wire segment 1015 and the connecting wire segment 1016. The bridge sections 1101, 1103, 1105, 1107, 1109, 1111, 1113 and 1115 are located on the non-lead-out side of the stator, and the bridge sections 1102, 1104, 1106, 1108, 1110, 1112 and 1114 are located on the lead-out side of the stator. A distance between two adjacent linear segments of the fourth formed wire 100 may be one of a first span, a second span, or a fourth span. This is explained further in subsequent paragraphs. According to an embodiment, referring to FIG. 10, each fourth formed wire 100 may include sixteen linear wire sections (forty-eight stator slots/three phases) and fifteen bridge sections. However, the disclosure is not limited to this.

In an embodiment, the first formed wire 30 and the third formed wire 80 have substantially the same shape, with the connecting ends being bent in opposite directions. As shown in FIGS. 3 and 8, the connecting end 350 of the first formed wire 30 is bent in an opposite direction to the lead-out end 360, and the connecting end 850 of the third formed wire 80 is bent towards the lead-out end 860. Similarly, the second formed wire 60 and the fourth formed wire 100 have substantially the same shape, with the connecting ends 350 and 360 being bent in opposite directions. As shown in FIGS. 6 and 10, the connecting end 650 of the second formed wire 60 is bent in an opposite direction to the lead-out end 660, and the connecting end 1050 of the fourth formed wire 100 is bent towards the lead-out end 1060.

As described above, each of the bridge sections of the formed wires is used to connect two adjacent linear wire sections. A middle bend of each of the bridge sections is substantially maintained at the position of an angular bisector for two adjacent linear wire sections. In an embodiment, in order to use the space for winding on each side of the stator more effectively, the bends of the bridge sections of the formed wires of the disclosure can further vary.

Specifically, it is assumed that a formed wire contains J bridge sections. As described above, J may be defined as: J = (number of stator slots/number of motor phases)-1. The number of stator slots is assumed to be 2*n. In an embodiment, the bends of the bridge sections of the first formed wire 30 and the second formed wire 60 can vary as follows:
(1) on the lead-out side, the bend of a central bridge section (i.e., the (J + 1)/2th bridge section) can be adjusted to be shifted by a first arc Q1 toward the lead-out wire segment, where the first arc Q1 is given by: pi/(2*n);
(2) on the non-lead-out side, the bends of the two consecutive bridge sections on a non-lead-out side end that are immediately followed by the central bridge section (i.e., the [(J + 1)/2]-1th and [(J + 1)/2]-3th bridge sections) may be adjusted to be shifted by a second arc Q2 toward the connecting wire segment, where the second arc Q2 is given by: Q2 = pi/n; and
(3) except for the above variations, each of the bends of the other bridge sections is maintained at the position of an angular bisector for two adjacent linear wire segments.

Taking the first formed wire 30 as an example, and referring to FIG. 3, the first formed wire 30 includes a total of fifteen bridge sections, of which each of the bends of the bridge sections 401-406 and 409-415 is substantially maintained at the position of an angular bisector for two adjacent linear wire segments. In addition, the bend of the central bridge section 408 (i.e., the 8th bridge section) on the lead-out side is adjusted to be shifted by the first arc Q1 = pi/(2*n) toward the lead-out wire segment 301. The bends of the two consecutive bridge sections 407 and 405 (i.e., the 7th and 5th bridge sections) on a non-lead-out side end that are immediately followed by the central bridge section 408 are adjusted to be shifted by a second arc Q2 = pi/n toward the connecting wire segment 316.

In addition, in an embodiment, the bends of the bridge sections of the third formed wire 80 and the fourth formed wire 100 may vary as follows:
(1) on the lead-out side, the bend of a central bridge section (i.e., the (J + 1)/2th bridge section) can be adjusted to be shifted by a first arc Q1 toward the lead-out wire segment, where the first arc Q1 is given by: Q1 = pi/(2*n);
(2) on the lead-out side, the bend of the bridge section (i.e., the [(J + 1)/2] + 2th bridge section) on the lead-out side that immediately follows the central bridge section may be adjusted to be shifted by a second arc Q2 toward the lead-out wire segment, where the second arc Q2 is given by: Q2 = pi/n;
(3) on the non-lead-out side, the bend of the bridge section (i.e., [(J + 1)/2]-1th bridge section) on a non-lead-out side end that is immediately followed by the central bridge section can be adjusted to be shifted by a second arc Q2 toward the connecting wire segment, where the second arc Q2 is given by: Q2 = pi/n; and
(4) except for the above variations, each of the bends of the other bridge sections is maintained at the position of an angular bisector for two adjacent linear wire segments.

Taking the third formed wire 80 as an example, and referring to FIG. 8, the third formed wire 80 includes a total of fifteen bridge sections, of which each of the bends of the bridge sections 901-906, 909 and 911-915 is substantially maintained at the position of an angular bisector for two adjacent linear wire segments. In addition, the bend of the central bridge section 908 (i.e., the 8th bridge section) on the lead-out side is adjusted to be shifted by the first arc Q1 = pi/(2*n) toward the lead-out wire segment 801; the bend of the bridge section 910 (i.e., the tenth bridge section) on the lead-out side that immediately follows the central bridge section 908 is adjusted to be shifted by a second arc Q2 = pi/n toward the lead-out wire segment 801; and the bend of the bridge section 907 (i.e., the seventh bridge section) on the non-lead-out side end that is immediately followed by the central bridge section 908 is adjusted to be shifted by a second arc Q2 = pi/n toward the connecting wire segment 816.

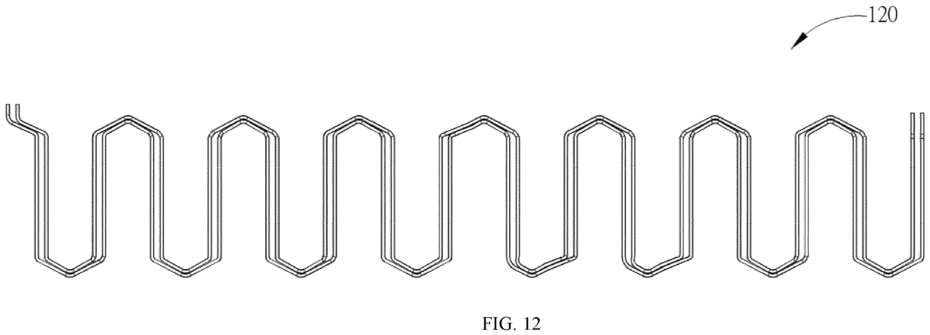

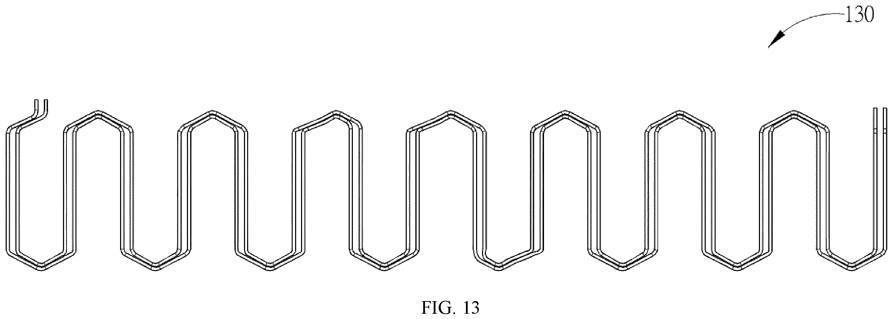

The flat-wire wave winding 10 of the disclosure is composed of a plurality of formed wires. With respect to a manufacturing process, the plurality of formed wires may be superposed together in order and offset from each other by a fixed slot pitch according to the winding rules, the formed wires are then wound into a coil corresponding to a set number of slots at the tooling, and finally the coil is pushed into the stator through the open ends of the stator slots to form a winding coil. As shown in FIGS. 12 and 13, in an embodiment, the flat-wire wave winding 10 of the disclosure may be composed of a plurality of first formed wires 30, a plurality of second formed wires 60, a plurality of third formed wires 80, and a plurality of fourth formed wires 100. As shown in FIGS. 12 and 13, with respect to a process, the first formed wire 30 and the second formed wire 60 may be regarded as a first pair of formed wires 120, and the third formed wire 80 and the fourth formed wire 100 may be regarded as a second pair of formed wires 130. During production, a plurality of first pairs of formed wires 120 and a plurality of second pairs of formed wires 130 may be superposed together in order and offset from each other by a fixed slot pitch according to the winding rules, and are then wound into a coil corresponding to a set number of slots at the tooling, and finally the coil is pushed into the stator through the open ends of the stator slots to form a winding. In the above embodiment of the three-phase motor with forty-eight stator slots, the flat-wire wave winding 10 is composed of twelve pairs of formed wires (six formed wires of each of four types), and individual wires are offset from each other by a slot pitch after being superposed and are wound before being pushed into the stator.

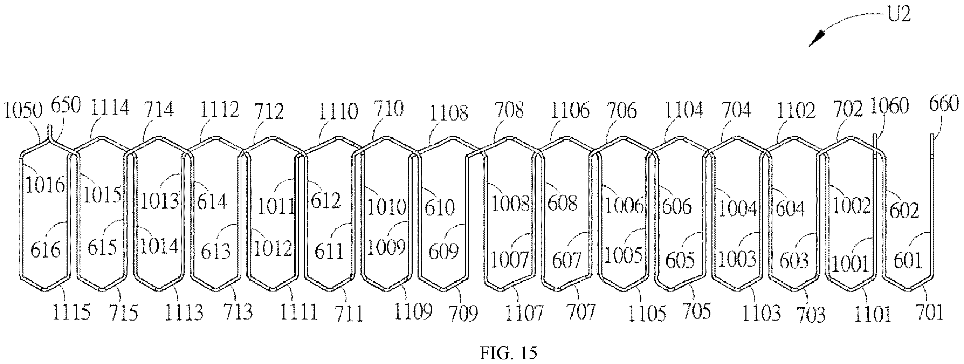

The flat-wire wave winding 10 of the disclosure is suitable for a multi-phase motor containing multi-phase currents. Taking a three-phase motor as an example, the winding structure of the flat-wire wave winding 10 of the disclosure is composed of a plurality of coils to form U-phase, V-phase and W-phase windings, such that a U-phase current, a V-phase current and a W-phase current may flow into the windings respectively. The U-phase winding will be taken as an example to describe the coil winding configuration of the flat-wire wave winding 10 of the disclosure. As shown in FIGS. 15 and 16, in an embodiment, the U-phase winding includes a first coil U1, a second coil U2, a third coil U3, and a fourth coil U4. The four coils may be connected in parallel or in series to form a U-phase winding with one, two or four paths according to design requirements. The arrangement of each coil in a stator will be described in detail below.

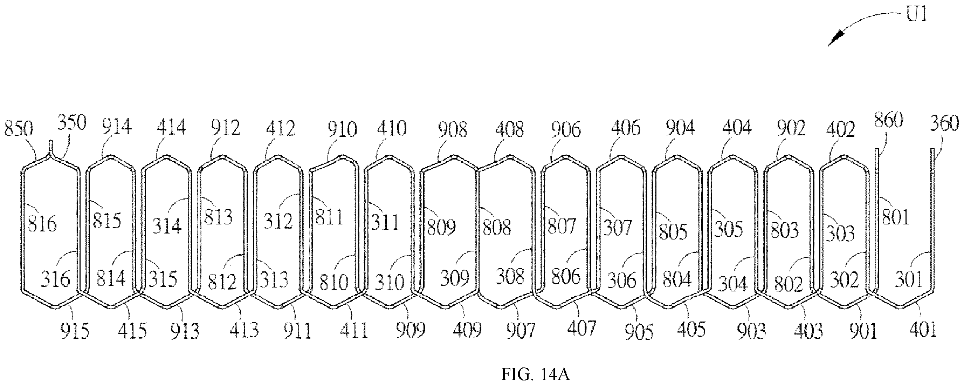

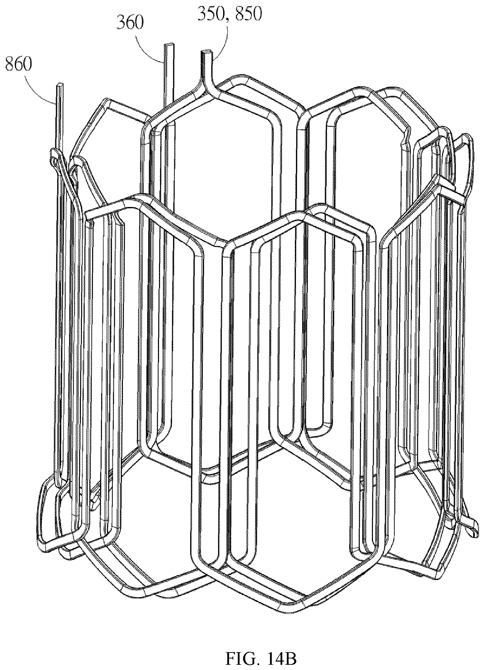

Referring to FIGS. 14A and 14B, FIG. 14A is a schematic diagram of the first coil U1 that has spread, and FIG. 14B is a schematic structural diagram of the first coil U1 in a stator. According to an embodiment of the disclosure, the first coil U1 may be composed of a first formed wire 30 and a third formed wire 80. The first formed wire 30 is a coil extending from the outermost layer to an inner layer of the wire layers, and the third formed wire 80 is a coil extending from the innermost layer to an outer layer of the wire layers. The structures of the first formed wire 30 and the third formed wire 80 have been described previously and will not be repeated herein. The first coil U1 may be formed by welding the two connecting ends 350 and 850 of the two formed wires. In this embodiment, the first coil U1 occupies a total of 32 specific wire layer positions of specific stator slots, forming a part of the structure of the flat-wire wave winding 10 of the disclosure.

FIG. 15 is a schematic diagram of the second coil U2. According to an embodiment, the second coil U2 is composed of a second formed wire 60 and a fourth formed wire 100. The second formed wire 60 is a coil extending from the outermost layer to an inner layer of the wire layers, and the fourth formed wire 100 is a coil extending from the innermost layer to an outer layer of the wire layer. The structures of the second formed wire 60 and the fourth formed wire 100 have been described previously and will not be repeated herein. The second coil U2 may be formed by welding the two connecting ends 650 and 1050 of the two formed wires. In this embodiment, the second coil U2 occupies a total of 32 specific wire layer positions of specific stator slots, forming a part of the structure of the flat-wire wave winding 10 of the disclosure.

In addition, the third coil U3 has a similar structure to the first coil U1, and is also composed of a first formed wire 30 and a third formed wire 80, which will not be repeated herein. The fourth coil U4 is similar to the second coil U2 and is also composed of a second formed wire 60 and a fourth formed wire 100, which will not be repeated herein.

Referring to FIGS. 16 and 17, FIG. 16 shows an embodiment of the winding structure of the flat-wire wave winding 10 of the disclosure, and FIG. 17 shows another embodiment of the winding structure of the flat-wire wave winding 10 of the disclosure. In order to clearly illustrate the position of the flat-wire wave winding 10 in the stator slots and the wire layers, the U-phase winding of the three-phase motor with forty-eight stator slots described above will be exemplified with respect to FIG. 16.

Referring to FIGS. 14A and 16, as described above, the first coil U1 of this embodiment is composed of the first formed wire 30 and the third formed wire 80 as described above. The first formed wire 30 is a coil extending from the outermost layer to an inner layer of the wire layers, and the third formed wire 80 is a coil extending from the innermost layer to an outer layer of the wire layers. As shown in FIG. 16, the lead-out wire segment 301 of the first formed wire 30 occupies the outermost wire layer position of the third stator slot (3#L1), and the connecting wire segment 316 occupies the innermost wire layer position of the 47th stator slot (47#L8) close to the opening of the stator slot, and the intermediate linear wire segments 302-315 occupy specific stator slots and wire layer positions in sequence. In addition, as shown in FIG. 16, the connecting wire segment 816 of the third formed wire 80 occupies the innermost wire layer position of the fifth stator slot (5#L8) close to the opening of the stator slot, and the lead-out wire segment 801 occupies the outermost wire layer position of the ninth stator slot (9#L1). Similarly, the intermediate linear wire segments 802-815 occupy specific stator slots and wire layer positions in sequence. Specifically, as shown in FIG. 16, the structure of the first coil U1 in the stator can be configured as follows:
3#L1 - 10#L2 - 15#L2 - 22#L2 - 27#L3 - 34#L4 - 39#L4 - 46#L4 - 4#L5 - 11#L6 - 16#L6 - 23#L6 - 28#L7 - 35#L8 - 40#L8 - 47#L8 - 5#L8 - 46#L7 - 41#L7 - 34#L7 - 29#L6 - 22#L5 - 17#L5 - 10#L5 - 4#L4 - 45#L3 - 40#L3 - 33#L3 - 28#L2 - 21#L1 - 16#L1 - 9#L1.

Referring to FIGS. 15 and 16, as described above, the second coil U2 of this embodiment is composed of the second formed wire 60 and the fourth formed wire 100. The second formed wire 60 is a coil extending from the outermost layer to an inner layer of the wire layers, and the fourth formed wire 100 is a coil extending from the innermost layer to an outer layer of the wire layer. As shown in FIG. 16, the lead-out wire segment 601 of the second formed wire 60 occupies the outermost wire layer position of the fourth stator slot (4#L1), and the connecting wire segment 616 occupies the innermost wire layer position of the 46th stator slot (46#L8) close to the opening of the stator slot, and the intermediate linear wire segments 602-615 occupy specific stator slots and wire layer positions in sequence. In addition, as shown in FIG. 15, the connecting wire segment 1016 of the fourth formed wire 100 occupies the innermost wire layer position of the fourth stator slot (4#L8) close to the opening of the stator slot, and the lead-out wire segment 1001 occupies the outermost wire layer position of the tenth stator slot (10#L1). Similarly, the intermediate linear wire segments 1002-1015 occupy specific stator slots and wire layer positions in sequence. Specifically, as shown in FIG. 16, the structure of the second coil U2 in the stator may be configured as follows:
4#L1 - 9#L2 - 16#L2 - 21#L2 - 28#L3 - 33#L4 - 40#L4 - 45#L4 - 5#L5 - 10#L6 - 17#L6 - 22#L6 - 29#L7 - 34#L8 - 41#L8 - 46#L8 - 4#L8 - 47# - L7 - 40#L7 - 35#L7 - 28#L6 - 23#L5 - 16#L5 - 11#L5 - 3#L4 - 46#L3 - 39#L3 - 34#L3 - 27#L2 - 22#L1 - 15#L1 - 10#L1.

Like the first coil U1, similarly, the third coil U3 of this embodiment is also composed of the first formed wire 30 and the third formed wire 80 (schematic diagram omitted). The first formed wire 30 is a coil extending from the outermost layer to an inner layer of the wire layers, and the third formed wire 80 is a coil extending from the innermost layer to an outer layer of the wire layers. As shown in FIG. 16, the lead-out wire segment 301 of the first formed wire 30 occupies the outermost wire layer position of the 27th stator slot (27#L1), and the connecting wire segment 316 occupies the innermost wire layer position of the 23rd stator slot (23#L8) close to the opening of the stator slot, and the intermediate linear wire segments 302-315 occupy specific stator slots and wire layer positions in sequence. In addition, as shown in FIG. 16, the connecting wire segment 816 of the third formed wire 80 occupies the innermost wire layer position of the 29th stator slot (29#L8) close to the opening of the stator slot, and the lead-out wire segment 801 occupies the outermost wire layer position of the 33rd stator slot (33#L1). Similarly, the intermediate linear wire segments 802-815 occupy specific stator slots and wire layer positions in sequence. Specifically, as shown in FIG. 16, the structure of the third coil U3 in the stator may be configured as follows:
27#L1 - 34#L2 - 39#L2 - 46#L2 - 3#L3 - 10#L4 - 15#L4 - 22#L4 - 28#L5 - 35#L6 - 40#L6 - 47#L6 - 4#L7 - 11#L8 - 16#L8 - 23#L8 - 29#L8 - 22#L7 - 17#L7 - 10#L7 - 5#L6 - 46#L5 - 41#L5 - 34#L5 - 28#L4 - 21#L3 - 16#L3 - 9#L3 - 4#L2 - 45#L1 - 40#L1 - 33#L1.

Like the second coil U2, similarly, the fourth coil U4 of this embodiment is also composed of the second formed wire 60 and the fourth formed wire 100 (schematic diagram omitted). The second formed wire 60 is a coil extending from the outermost layer to an inner layer of the wire layers, and the fourth formed wire 100 is a coil extending from the innermost layer to an outer layer of the wire layer. As shown in FIG. 16, the lead-out wire segment 601 of the second formed wire 60 occupies the outermost wire layer position of the 28th stator slot (28#L1), and the connecting wire segment 616 occupies the innermost wire layer position of the 22nd stator slot (22#L8) close to the opening of the stator slot, and the intermediate linear wire segments 602-615 occupy specific stator slots and wire layer positions in sequence. In addition, as shown in FIG. 16, the connecting wire segment 1016 of the fourth formed wire 100 occupies the innermost wire layer position of the 28th stator slot (28#L8) close to the opening of the stator slot, and the lead-out wire segment 1001 occupies the outermost wire layer position of the 34th stator slot (34#L1). Similarly, the intermediate linear wire segments 1002-1015 occupy specific stator slots and wire layer positions in sequence. Specifically, as shown in FIG. 16, the structure of the fourth coil U4 in the stator may be configured as follows:
28#L1 - 33#L2 - 40#L2 - 45#L2 - 4#L3 - 9#L4 - 16#L4 - 21#L4 - 29#L5 - 34#L6 - 41#L6 - 46#L6 - 5#L7 - 10#L8 - 17#L8 - 22#L8 - 28#L8 - 23#L7 - 16#L7 - 11#L7 - 4#L6 - 47#L5 - 40#L5 - 35#L5 - 27#L4 - 22#L3 - 15#L3 - 10#L3 - 3#L2 - 46#L1 - 39#L1 - 34#L1.

It can be found from the comparison between the structure configurations of the first coil U1 and the third coil U3 in the stator that the third coil U3 is configured to be offset from the first coil U1 by twenty-four stator slots (i.e., the number of stator slots/2). That is, the shape and structure of the third coil U3 are substantially the same as the shape and structure of the first coil U1, and the stator slot occupied by each linear wire section of the third coil U3 is spaced apart from the stator slot occupied by each linear wire section of the first coil U1 by twenty-four slot pitches. Similarly, it can be found from the comparison between the structure configurations of the second coil U2 and the fourth coil U4 in the stator that the fourth coil U4 is configured to be offset from the second coil U2 by twenty-four stator slots (i.e., the number of stator slots/2). That is, the shape and structure of the fourth coil U4 are substantially the same as the shape and structure of the second coil U2, and the stator slot occupied by each linear wire section of the fourth coil U4 is spaced apart from the stator slot occupied by each linear wire section of the second coil U2 by twenty-four slot pitches. With regard to a process, it is only necessary to produce a plurality of the two groups of coils to complete the structure of the flat-wire wave winding 10 of the disclosure.

According to FIG. 16, rules for a coil span of the flat-wire wave winding 10 of the disclosure generally comprise three different variations with the pole pitch D:
(1) an alternation of a first span and a second span is maintained for two adjacent linear wire sections in sequence;
(2) when a central bridge section of a formed wire is encountered, a span between the two connected linear wire sections is adjusted to a third span; and
(3) when a formed wire is connected to another formed wire, a span between two connecting wire segments is adjusted to a fourth span.

In an embodiment, for the first coil U1 and the third coil U3, the first span is equal to a pole pitch D+1 and the second span is equal to a pole pitch D-1. In addition, the third span and the fourth span are equal, and both are equal to the pole pitch D. In addition, in an embodiment, for the second coil U2 and the fourth coil U4, the first span is equal to the pole pitch D-1, the second span is equal to the pole pitch D+1, and the third span is equal to a pole pitch D+2, and the fourth span is equal to the pole pitch D.

Specifically, taking the above forty-eight stator slots as an example, it is assumed that the pole pitch D is equal to 6. Referring to FIGS. 14A and 16, in the first coil U1, an alternation of seven slot pitches (i.e., the first span) and five slot pitches (i.e., the second span) is generally maintained for the spans between adjacent linear wire sections. For example, as shown, a span between the lead-out wire segment 301 and the linear wire segment 302 is seven slot pitches, a span between the linear wire segment 302 and the linear wire segment 303 is five slot pitches, and a span between the linear wire segment 303 and the linear wire segment 304 is seven slot pitches, and so on. However, when the central bridge section of the formed wire is encountered, the span is adjusted to six slot pitches (i.e., the third span). For example, a span between the two adjacent linear wire sections 308 and 309 connected by the central bridge section 408 of the first formed wire 30 is adjusted to six slot pitches. That is, when the first coil U1 spans from the fourth wire layer of the 46th slot (46#L4) to the fifth wire layer of the fourth slot (4#L5), the span is adjusted to six slot pitches. Similarly, a span between the two linear wire segments 808 and 809 connected by the central bridge section 908 of the third formed wire 80 is also adjusted to six slot pitches, that is, when the first coil U1 spans from the fifth wire layer of the tenth slot (10#L5) to the fourth wire layer of the fourth slot (4#L4). In addition, when two formed wires are connected, the span is adjusted to six slot pitches (i.e., the fourth span). For example, a span between the connecting wire segment 316 of the first formed wire 30 and the connecting wire segment 816 of the third formed wire 80 is changed to six slot pitches, that is, when the first coil U1 spans from the eighth wire layer of the 47th slot (47#L8) to the eighth wire layer of the fifth slot (5#L8).

Similarly, referring to FIG. 16, like the first coil U1, in the third coil U3, an alternation of seven slot pitches (i.e., the first span) and five slot pitches (i.e., the second span) is generally maintained for the spans between adjacent linear wire sections. However, when the central bridge section of the formed wire is encountered, the span is adjusted to six slot pitches (i.e., the third span), and when two formed wires are connected, the span is also adjusted to six slot pitches (i.e., the fourth span). Specifically, when the central bridge section of the formed wire is encountered, that is, when the third coil U3 spans from the fourth wire layer of the 22nd slot (22#L4) to the fifth wire layer of the 28th slot (28#L5), and when the third coil U3 spans from the fifth wire layer of the 34th slot (34#L5) to the fourth wire layer of the 28th slot (28#L4), the span is adjusted to six slot pitches. In addition, when two formed wires are connected, that is, when the third coil U3 spans from the eighth wire layer of the 23rd slot (23#L8) to the eighth wire layer of the 29th slot (29#L8), the span is adjusted to six slot pitches.

As shown in FIGS. 14A and 16, the three different spans are configured such that a distance of six slot pitches is maintained between the two lead-out wire segments 301 and 801 of the first coil U1 and the middles of the first formed wire 30 and the third formed wire 80 are aligned in the winding, that is, the central parts of the two formed wires are in adjacent wire layer positions (i.e., the 4th and 5th layers) of the same stator slot (note: the 4th stator slot), and the remaining parts of the two formed wires remain offset from each other by one stator slot.

Similarly, it is the same case for the third winding U3.

In addition, taking the above forty-eight stator slots as an example, it is assumed that the pole pitch D is equal to 6. Referring to FIGS. 15 and 16, in the second coil U2, an alternation of five slot pitches (i.e., the first span) and seven slot pitches (i.e., the second span) is generally maintained for the spans between adjacent linear wire sections. For example, as shown, a span between the lead-out wire segment 601 and the linear wire segment 602 is five slot pitches, a span between the linear wire segment 602 and the linear wire segment 603 is seven slot pitches, and a span between the linear wire segment 603 and the linear wire segment 604 is five slot pitches, and so on. However, when the central bridge section of the formed wire is encountered, the span is adjusted to eight slot pitches (i.e., the third span). For example, a span between the two adjacent linear wire sections 608 and 609 connected by the central bridge section 708 of the second formed wire 60 is adjusted to eight slot pitches, that is, when the second coil U2 spans from the fourth wire layer of the 45th slot (45#L4) to the fifth wire layer of the fifth slot (5#L5). Similarly, a span between the two linear wire segments 1008 and 1009 connected by the central bridge section 1108 of the fourth formed wire 100 is also adjusted to eight slot pitches, that is, when the second coil U2 spans from the fifth wire layer of the eleventh slot (11#L5) to the fourth wire layer of the third slot (3#L4). In addition, when two formed wires are connected, the span is adjusted to six slot pitches (i.e., the fourth span). For example, a span between the connecting wire segment 616 of the second formed wire 60 and the connecting wire segment 1016 of the fourth formed wire 100 is adjusted to six slot pitches, that is, when the second coil U2 spans from the eighth wire layer of the 46th slot (46#L8) to the eighth wire layer of the fourth slot (4#L8).

Similarly, referring to FIG. 16, like the second coil U2, in the fourth coil U4, an alternation of five slot pitches (i.e., the first span) and seven slot pitches (i.e., the second span) is generally maintained for the spans between adjacent linear wire sections. However, when the central bridge section of the formed wire is encountered, the span is adjusted to eight slot pitches (i.e., the third span), and when two formed wires are connected, the span is also adjusted to six slot pitches (i.e., the fourth span). Specifically, when the central bridge section of the formed wire is encountered, that is, when the fourth coil U4 spans from the fourth wire layer of the 21st slot (21#L4) to the fifth wire layer of the 29th slot (29#L5), and when the fourth coil U4 spans from the fifth wire layer of the 35th slot (35#L5) to the fourth wire layer of the 27th slot (27#L4), the span is adjusted to eight slot pitches. In addition, when two formed wires are connected, that is, when the fourth coil U4 spans from the eighth wire layer of the 22nd slot (22#L8) to the eighth wire layer of the 28th slot (28#L8), the span is adjusted to six slot pitches.

As shown in FIGS. 15 and 16, the four different spans are configured such that a distance of six slot pitches is maintained between the two lead-out wire segments 601 and 1001 of the second coil U2 and the middles of the second formed wire 60 and the fourth formed wire 100 are offset from each by two slot pitches in the winding, that is, the central linear wire segments 609 and 1009 of the two formed wires are respectively in adjacent wire layer positions (i.e., the fourth and fifth layers) of the fifth and third stator slots, and the remaining linear wire segments of the two formed wires remain offset from each other by one stator slot. Similarly, it is the same case for the fourth coil U4.

According to another embodiment of the disclosure, referring to FIG. 17, no variation may be made to the flat-wire wave winding 10 of the disclosure in respect of span, and only except that the first span (i.e., pole pitch D+1) and the second span (i.e., the pole pitch D-1) alternate in sequence. Specifically, as shown in FIG. 17, an alternation of spans of seven slot pitches and of five slot pitches is maintained between two adjacent linear wire sections of the first coil U1 and the third coil U3. An alternation of spans of five slot pitches and of seven slot pitches is maintained between two adjacent linear wire sections of the second coil U2 and the fourth coil U4.

In addition to the span rules, the number of spanned layers between two adjacent linear wire sections of the flat-wire wave winding 10 of the disclosure should not exceed one wire layer in principle. As described above, the flat-wire wave winding 10 is composed of a plurality of coils which each are composed of at least one formed wire. When a formed wire is a coil extending from an outer layer to an inner layer of the wire layers (for example, the first formed wire 30 of the first coil U1), only one of the linear wire sections of the formed wire resides in each of all the odd-numbered wire layers, and the remaining linear wire sections evenly occupy all the even-numbered wire layers. When a formed wire is a coil extending from an inner layer to an outer layer of the wire layers (for example, the third formed wire 80 of the first coil U1), only one of the linear wire sections of the formed wire resides in each of all the even-numbered wire layers, and the remaining linear wire sections evenly occupy all the odd-numbered wire layers.

Taking the above forty-eight stator slots as an example, referring to FIGS. 14A and 16, the first formed wire 30 of the first coil U1 is a coil extending from an outer layer to an inner layer of the wire layers, so only one of the linear wire sections 301-316 of the first formed wire 30 resides in each of all the odd-numbered wire layers that the linear wire sections pass by, and the remaining linear wire sections are evenly distributed in all even-numbered wire layers that the linear wire sections pass by. Specifically, the linear wire sections 301, 305, 309 and 313 respectively occupy the odd-numbered wire layers L 1, L3, L5 and L7 in sequence, and the linear wire sections 302-304, 306-308, 310-312 and 314-316 respectively occupy the even-numbered wire layers L2, L4, L6 and L8 in sequence. On the contrary, the third formed wire 80 of the first coil U1 is a coil extending from an inner layer to an outer layer of the wire layers, so only one of the linear wire sections 801-816 of the third formed wire 80 resides in each of all the even-numbered wire layers that the linear wire sections pass by, and the remaining linear wire sections are evenly distributed in all the odd-numbered wire layers that the linear wire sections pass by. Specifically, the linear wire sections 816, 812, 808 and 804 respectively occupy the even-numbered wire layers L8, L6, L4 and L2 in sequence, and the linear wire sections 813-815, 809-811, 805-807 and 801-803 respectively occupy the odd-numbered wire layers L7, L5, L3 and L1 in sequence. The wire layer winding rules for the second coil U2, the third coil U3 and the fourth coil U4 are the same as those of the first coil U1 and will not be repeated herein.

The first coil U1, the second coil U2, the third coil U3 and the fourth coil U4 form the U-phase winding of the flat-wire wave winding 10. The V-phase winding and W-phase winding of the disclosure are generally similar to the U-phase winding in terms of structure, but each occupy the stator slots that are offset from each other by two stator slots. By way of example, in an embodiment in which a plurality of varying spans are included, the U-phase winding occupies the stator slots 3# - 5#, 9# - 11#, 15# - 17#, 21# - 23#, 27# - 29#, 33# - 35#, 39# - 41# and 45# - 47# in sequence, the V-phase winding occupies the stator slots 5# - 7#, 11# - 13#, 17# - 19#, 23# - 25#, 29# - 31#, 35# - 37#, 41# - 43# and 47# - 1# in sequence, and the W-phase winding occupies the stator slots 7# - 9#, 13# - 15#, 19# - 21#, 25# - 27#, 31# - 33#, 37# - 39#, 43# - 45# and 1# - 3# in sequence. Similarly, those skilled in the art can further deduce the stator slots occupied by the U-phase winding, the V-phase winding and the W-phase winding respectively when there are only two varying spans. As shown in FIGS. 16 and 17, regardless of the winding rules, for a three-phase motor with forty-eight stator slots, the flat-wire wave winding 10 requires a total of twenty-four formed wires (three phases * four windings * two formed wires) to fill all the stator slots.

The flat-wire wave winding disclosed in the disclosure may be suitable for an M-phase motor. The M-phase motor contains 2*n stator slots, 2*k wire layer positions are defined in each stator slot, the number of pole pairs of a rotor is p, and a pole pitch is D, wherein 2*k is an even number not less than 4, and M is a positive integer. The flat-wire wave winding of this embodiment includes M phase windings. Each phase winding includes a plurality of coils. Each coil is composed of at least one formed wire. The formed wire includes a plurality of linear wire segments and a plurality of bridge sections connecting two adjacent linear wire segments. The total number of the linear wire segments I of the formed wire may be set by: I = number of stator slots 2*n/number of motor phases M. The total number J of the bridge sections is given by: J = number of linear wire segments I - 1.

In an embodiment, the formed wire includes at least a first formed wire and a second formed wire. The linear wire sections of each of the first formed wire and the second formed wire include a lead-out wire segment, a connecting wire segment, and a plurality of linear wire segments. In addition, the lead-out wire segment includes a lead-out end, and the connecting wire segment includes a connecting end.

In the disclosure, the structures and shapes of the first formed wire and a second formed wire and the winding rules for the flat-wire wave winding are as follows:
Rule 1: an alternation of the first span and the second span is maintained between two adjacent linear wire sections of the first formed wire in sequence;
Rule 2: an alternation of the second span and the first span is maintained between two adjacent linear wire sections of the second formed wire in sequence;
Rule 3: regardless of the first formed wire or the second formed wire, when the central bridge section is encountered, a span between two connected linear wire sections is adjusted to the third span; and
Rule 4: regardless of the first formed wire or the second formed wire, when the two formed wires are connected, a span between their two connecting wire segments is adjusted to the fourth span.

The first span is equal to the pole pitch D+1 of the M-phase motor, the second span is equal to the pole pitch D-1 of the M-phase motor, and the fourth span is equal to the pole pitch D of the M-phase motor. In addition, for the first formed wire, the third span is also equal to the pole pitch D of the M-phase motor. However, for the second formed wire, the third span is equal to the pole pitch D+2 of the M-phase motor.

In another embodiment, the above-mentioned winding Rules 3 and 4 are optional rules.

In another embodiment, the flat-wire wave winding of the disclosure further includes a plurality of coils to form a phase winding, and each coil is composed of at least two formed wires. The first formed wire is a coil extending from the outermost ring of wire layer positions of the stator to an inner ring close to the openings of the stator slots, the second formed wire is a coil extending from the innermost ring of wire layer positions of the stator to an outer ring, and the two formed wires are bent and then welded together at their one end. The winding rules for the flat-wire wave winding of the disclosure further include:
Rule 5: only one of the linear wire sections of the first formed wire resides on average in each of odd-numbered wire layers, and the remaining linear wire sections are evenly distributed in all even-numbered wire layers in sequence; and
Rule 6: only one of the linear wire sections of the second formed wire resides on average in each of even-numbered wire layers, and the remaining linear wire sections are distributed evenly in all odd-numbered wire layers in sequence.

In another embodiment, the plurality of coils of the flat-wire wave winding of the disclosure can be further classified as first coils and second coils. The flat-wire wave winding of the disclosure is composed of a plurality of first coils and a plurality of second coils. Each first coil may be composed of two first formed wires. One of the first formed wires is a coil extending from the outermost ring of wire layer positions of the stator to an inner ring close to the openings of the stator slots, the other of the first formed wires is a coil extending from the innermost ring of wire layer positions of the stator to an outer ring, and the two first formed wires are bent and then welded together at their one end. In addition, each second coil may be composed of two second formed wires, wherein one of the second formed wires is a coil extending from the outermost ring of wire layer positions of the stator to an inner ring close to the openings of the stator slots, the other of the second formed wires is a coil extending from the innermost ring of wire layer positions of the stator to an outer ring, and the two second formed wires are bent and then welded together at their one end. The first coils and the second coils form a phase winding in the stator according to the above Rules 1 to 6.

In addition, the winding rules for the flat-wire wave winding of the disclosure further include:
Rule 7: the stator slot occupied by each linear wire section of one first coil is spaced apart from the stator slot occupied by each corresponding linear wire section of the other first coil by slot pitches of half the total number of stator slots; and the stator slot occupied by each linear wire section of one second coil is spaced apart from the stator slot occupied by each corresponding linear wire section of the other second coil by slot pitches of half the total number of stator slots.

In another embodiment, for ease of a production process, the wires required to form the flat-wire wave winding of the disclosure can be made into desired shapes to reduce the bending required during welding. Specifically, the formed wires of shapes required for the flat-wire wave winding of the disclosure may further include a first formed wire, a second formed wire, a third formed wire and a fourth formed wire. The shape of the third formed wire is substantially the same as the shape of the first formed wire, and the linear wire sections also follows the Rules 1 to 4 above. However, the connecting ends of the third formed wire and the first formed wire are bent in opposite directions. For example, the connecting end of the first formed wire is bent in an opposite direction to the lead-out end, and the connecting end of the third formed wire is bent towards the lead-out end. Similarly, the shape of the fourth formed wire is substantially the same as the shape of the second formed wire, and the linear wire sections also follows the Rules 1 to 4 above. However, the connecting ends of the fourth formed wire and the second formed wire are bent in opposite directions. For example, the connecting end of the second formed wire is bent in an opposite direction to the lead-out end, and the connecting end of the fourth formed wire is bent towards the lead-out end. Because the connecting ends of the formed wires have been directly pre-produced by bending desirably in the process, the first coil may be formed by means of directly welding the connecting ends of the first formed wire and the third formed wire, and the second coil may be formed by means of directly welding the connecting ends of the second formed wire and the fourth formed wire, which can reduce steps of bending during welding and thus reduce damages.

In addition, the shapes of the first formed wire, the second formed wire, the third formed wire and the fourth formed wire may further vary as follows:
(1) on the lead-out side, the bend of a central bridge section (i.e., the (J + 1)/2th bridge section) can be adjusted to be shifted by a first arc Q1 toward the lead-out wire segment, where the first arc Q1 is given by: pi/(2*n);
(2) on the non-lead-out side, the bends of the two consecutive bridge sections on a non-lead-out side end that are immediately followed by the central bridge section (i.e., the [(J + 1)/2] - 1th and [(J + 1)/2] - 3th bridge sections) may be adjusted to be shifted by a second arc Q2 toward the connecting wire segment, where the second arc Q2 is given by: Q2 = pi/n; and
(3) except for the above variations, each of the bends of the other bridge sections is maintained at the position of an angular bisector for two adjacent linear wire segments.

The bends of the bridge sections of the third formed wire and the fourth formed wire may vary as follows:
(1) on the lead-out side, the bend of the central bridge section (i.e., the (J + 1)/2th bridge section) can be adjusted to be shifted by a first arc Q1 toward the lead-out wire segment, where the first arc Q1 is given by: Q1 = pi/(2*n);
(2) on the lead-out side, the bend of the bridge section (i.e., the [(J + 1)/2] + 2th bridge section) on the lead-out side that immediately follows the central bridge section may be adjusted to be shifted by a second arc Q2 toward the lead-out wire segment, where the second arc Q2 is given by: Q2 = pi/n;
(3) on the non-lead-out side, the bend of the bridge section (i.e., [(J + 1)/2] - 1th bridge section) on a non-lead-out side end that is immediately followed by the central bridge section can be adjusted to be shifted by a second arc Q2 toward the connecting wire segment, where the second arc Q2 is given by: Q2 = pi/n; and
(4) except for the above variations, each of the bends of the other bridge sections is maintained at the position of an angular bisector for two adjacent linear wire segments.

In the equations, pi is the ratio of circumference to diameter.

In this embodiment, each first coil may be composed of a first formed wire and a third formed wire, and each second coil may be composed of a second formed wire and a fourth formed wire. A plurality of first coils and a plurality of second coils form a phase winding in the stator according to the configuration of the Rules 5 to 7 above.

In summary, the coils of the flat-wire wave winding of the disclosure are formed by winding simple formed wires, and are simpler than existing wave-wound coils in terms of production and process. The wires are formed at a time, which saves 90% of welding points of a winding and can thus save the quantity of motor wires used. In addition, the flat-wire wave winding according to the embodiments of the disclosure may use a long-pitch design to weaken the tooth harmonics so as to improve noise, vibration and harshness (NVH), or may use a positional integral pitch design to increase a torque. Therefore, the flat-wire wave winding of the disclosure can significantly reduce risky operations such as cutting-off, bending and welding of wires of existing flat-wire winding coils.

The above descriptions are only preferred embodiments of the disclosure, and all equivalent changes and modifications made in accordance with the patentable scope of the disclosure shall fall within the scope of the disclosure.

## Claims

1. A flat-wire wave winding for a multi-phase motor, wherein the multi-phase motor has a pole pitch, the multi-phase motor comprises a stator, the stator has a plurality of stator slots, each of the stator slots comprising an open end, an even number of wire layer positions being defined in each of the stator slots, and the wire layer positions including a first wire layer position farthest from the open end and a last wire layer position closest to the open end, the flat-wire wave winding comprising:
a first coil comprising a first formed wire and a third formed wire; and
a second coil comprising a second formed wire and a fourth formed wire;
wherein the first formed wire, the second formed wire, the third formed wire and the fourth formed wire each have a plurality of linear wire sections and a plurality of bridge sections each for connecting two adjacent linear wire sections, the plurality of linear wire sections including a lead-out wire segment, a connecting wire segment and a plurality of linear wire segments;
an alternation of the pole pitch plus one and the pole pitch minus one is maintained in sequence between the stator slots in which two adjacent linear wire sections of each of the first formed wire and the third formed wire are positioned;
an alternation of the pole pitch minus one and the pole pitch plus one is maintained in sequence between the stator slots in which two adjacent linear wire sections of each of the second formed wire and the fourth formed wire are positioned;
the lead-out wire segment of the first formed wire occupies the first wire layer position of one of the plurality of stator slots, and the connecting wire segment occupies the last wire layer position of one of the plurality of stator slots, only one of the plurality of linear wire segments resides on average in each of odd-numbered wire layer positions of the wire layer positions, and the remaining linear wire segments are evenly distributed in all even-numbered wire layer positions of the wire layer positions;
the lead-out wire segment of the second formed wire occupies the first wire layer position of one of the plurality of stator slots, and the connecting wire segment occupies the last wire layer position of one of the plurality of stator slots, only one of the plurality of linear wire segments resides on average in each of odd-numbered wire layer positions of the wire layer positions, and the remaining linear wire segments are evenly distributed in all even-numbered wire layer positions of the wire layer positions;
the lead-out wire segment of the third formed wire occupies the first wire layer position of one of the plurality of stator slots, and the connecting wire segment occupies the last wire layer position of one of the plurality of stator slots, only one of the plurality of linear wire segments resides on average in each of even-numbered wire layer positions of the wire layer positions, and the remaining linear wire segments are evenly distributed in all odd-numbered wire layer positions of the wire layer positions; and
the lead-out wire segment of the fourth formed wire occupies the first wire layer position of one of the plurality of stator slots, and the connecting wire segment occupies the last wire layer position of one of the plurality of stator slots, only one of the linear wire segments resides on average in each of even-numbered wire layer positions of the wire layer positions, and the remaining linear wire segments are evenly distributed in all odd-numbered wire layer positions of the wire layer positions.

2. The flat-wire wave winding according to claim 1, wherein a distance between the stator slots in which two adjacent linear wire sections connected by a central bridge section of the plurality of bridge sections of each of the first formed wire and the third formed wire are positioned is the pole pitch.

3. The flat-wire wave winding according to claim 1, wherein a distance between the stator slots in which two adjacent linear wire sections connected by a central bridge section of the plurality of bridge sections of each of the second formed wire and the fourth formed wire are positioned is the pole pitch plus two.

4. The flat-wire wave winding according to claim 1, wherein the respective connecting wire segments of the first formed wire and the first formed wire are connected to form the first coil or a third coil, wherein a distance between the stator slots in which the two adjacent connecting wire segments are located is adjusted to the pole pitch.

5. The flat-wire wave winding according to claim 1, wherein the flat-wire wave winding further comprises a third coil and a fourth coil, wherein each of the stator slots for the third coil is translated from a corresponding one of the stator slots for the first coil by half the number of the stator slots, and each of the stator slots for the fourth coil is translated from a corresponding one of the stator slots for the second coil by half the number of the stator slots.

6. The flat-wire wave winding according to claim 5, wherein the first coil, the second coil, the third coil and the fourth coil form a phase winding of the flat-wire wave winding.

7. The flat-wire wave winding according to claim 1, wherein the number of the linear wire sections of each of the first, second, third and fourth formed wires is equal to the number of the stator slots divided by the number of phases of the multi-phase motor.

8. A multi-phase motor having a pole pitch, the multi-phase motor comprising:
a rotor located at the center of the multi-phase motor and comprising a plurality of pole pairs;
a stator having a lead-out side and a non-lead-out side, the stator comprising a plurality of stator slots, each stator slot having an open end facing the rotor, an even number of wire layer positions being defined in each of the stator slots, a wire layer position farthest from the open end being a first wire layer position, and a wire layer position closest to the open end being a last wire layer position; and
a flat-wire wave winding comprising a plurality of coils, each of the coils being composed of two formed wires, each of the formed wires comprising a plurality of linear wire sections and a plurality of bridge sections each connecting two adjacent linear wire sections, the linear wire sections comprising a lead-out wire segment, a connecting wire segment and a plurality of linear wire segments, the flat-wire wave winding being placed in the stator according to a winding rule, and the winding rule comprising:
the lead-out wire segment of a first formed wire of the two formed wires being positioned in the first wire layer position of one of the stator slots, and the connecting wire segment of the first formed wire being positioned in the last wire layer position of one of the stator slots, wherein only one of the linear wire sections of the first formed wire resides on average in each of odd-numbered wire layer positions of the wire layer positions, and the remaining linear wire sections are evenly distributed in all even-numbered wire layer positions of the wire layer positions in sequence; and
the lead-out wire segment of a second formed wire of the two formed wires being positioned in the first wire layer position of one of the stator slots, and the connecting wire segment of the first formed wire being positioned in the last wire layer position of one of the stator slots, wherein only one of the linear wire sections of the second formed wire resides on average in each of even-numbered wire layer positions of the wire layer positions, and the remaining linear wire sections are evenly distributed in all odd-numbered wire layer positions of the wire layer positions in sequence;
wherein the respective connecting wire segments of the first formed wire and the second formed wire are connected to form the coil.

9. The multi-phase motor of claim 8, wherein the formed wire comprises a first formed wire and a second formed wire, and the winding rule further comprises:
a first span and a second span alternate in sequence between the stator slots in which two adjacent linear wire sections of the first formed wire are positioned; and
the second span and the first span alternate in sequence between the stator slots in which two adjacent linear wire sections of the second formed wire are positioned;
wherein the first span is the pole pitch plus one, and the second span is the pole pitch minus one.

10. The multi-phase motor of claim 9, wherein the winding rule further comprises:
a distance between the stator slots in which two adjacent linear wire sections connected by a central bridge section of the first formed wire are positioned being the pole pitch; and
a distance between the stator slots in which two adjacent linear wire sections connected by a central bridge section of the second formed wire are positioned is the pole pitch plus two.

11. The multi-phase motor of claim 9, wherein the winding rule further comprises:
a distance between the stator slots in which the two adjacent connecting wire segments at a connection between a first one and a second one of the first formed wires are positioned is the pole pitch; and
a distance between the stator slots in which the two adjacent connecting wire segments at a connection between a first one and a second one of the second formed wires are positioned is the pole pitch.

12. The multi-phase motor of claim 8, wherein the number of the linear wire sections of each of the formed wires is the number of the stator slots divided by the number of phases of the multi-phase motor.

13. A three-phase motor, comprising:
a rotor having four pole pairs;
a stator comprising forty-eight stator slots numbered #1-48#, wherein each stator slot has an open end facing the rotor, and eight wire layer positions are defined in each of the stator slots, the wire layer positions being numbered L1-L8 in sequence from the one furthest from the open end to the one closest to the open end; and
a flat-wire wave winding comprising:
a first coil and a third coil each comprising a first formed wire and a third formed wire; and
a second coil and a fourth coil each comprising a second formed wire and a fourth formed wire;
wherein each of the first formed wire, the second formed wire, the third formed wire and the fourth formed wire comprises sixteen linear wire sections and fifteen bridge sections each for connecting two adjacent linear wire sections.

14. The three-phase motor according to claim 13, wherein seven slot pitches and five slot pitches alternate in sequence between the stator slots in which the linear wire sections of each of the first coil and the third coil are positioned, and five slot pitches and seven slot pitches alternate in sequence between the stator slots in which the linear wire sections of each of the second coil and the fourth coil are positioned.

15. The three-phase motor according to claim 14, wherein a distance between the stator slots in which two adjacent linear wire sections connected by the eighth bridge section of each of the first formed wire and the third formed wire is six slot pitches, and a distance between the stator slots in which two adjacent linear wire sections connected by the eighth bridge section of each of the second formed wire and the third formed wire is eight slot pitches.

16. The three-phase motor according to claim 14, wherein a distance between the stator slots in which two adjacent linear wire sections at a connection between the first formed wire and the third formed wire is six slot pitches, and a distance between the stator slots in which two adjacent linear wire sections at a connection between the second formed wire and the fourth formed wire is six slot pitches.

17. The three-phase motor according to claim 13, wherein only one of the linear wire sections of each of the first formed wire and the second formed wire resides on average in each of the wire layer positions L1, L3, L5 and L7, and the remaining linear wire sections are evenly distributed in all the wire layer positions L2, L4, L6 and L8 in sequence; and only one of the linear wire sections of each of the third formed wire and the fourth formed wire resides on average in each of the wire layer positions L2, L4, L6 and L8, and the remaining linear wire sections are evenly distributed in all the wire layer positions L1, L3, L5 and L7 in sequence.

18. The three-phase motor according to claim 13, wherein each of the stator slots for the third coil is translated from a corresponding one of the stator slots for the first coil by twenty-four stator slots, and each of the stator slots for the fourth coil is translated from a corresponding one of the stator slots for the second coil by twenty-four stator slots.

19. The three-phase motor according to claim 13, wherein the first coil, the second coil, the third coil and the fourth coil form a phase winding of the flat-wire wave winding.

20. The three-phase motor according to claim 13, wherein
the stator slots in which the first coil are positioned are: 3#L1 - 10#L2 - 15#L2 - 22#L2 - 27#L3 - 34#L4 - 39#L4 - 46#L4 - 4#L5 - 11#L6 - 16#L6 - 23#L6 - 28#L7 - 35#L8 - 40#L8 - 47#L8 - 5#L8 - 46#L7 - 41#L7 - 34#L7 - 29#L6 - 22#L5 - 17#L5 - 10#L5 - 4#L4 - 45#L3 - 40#L3 - 33#L3 - 28#L2 - 21#L1 - 16#L1 - 9#L1;
the stator slots in which the second coil are positioned are: 4#L1 - 9#L2 - 16#L2 - 21#L2 - 28#L3 - 33#L4 - 40#L4 - 45#L4 - 5#L5 - 10#L6 - 17#L6 - 22#L6 - 29#L7 - 34#L8 - 41#L8 - 46#L8 - 4#L8 - 47# - L7 - 40#L7 - 35#L7 - 28#L6 - 23#L5 - 16#L5 - 11#L5 - 3#L4 - 46#L3 - 39#L3 - 34#L3 - 27#L2 - 22#L1 - 15#L1 - 10#L 1;
the stator slots in which the third coil are positioned are: 27#L1 - 34#L2 - 39#L2 - 46#L2 - 3#L3 - 10#L4 - 15#L4 - 22#L4 - 28#L5 - 35#L6 - 40#L6 - 47#L6 - 4#L7 - 11#L8 - 16#L8 - 23#L8 - 29#L8 - 22#L7 - 17#L7 - 10#L7 - 5#L6 - 46#L5 - 41#L5 - 34#L5 - 28#L4 - 21#L3 - 16#L3 - 9#L3 - 4#L2 - 45#L1 - 40#L1 - 33#L1; and
the stator slots in which the fourth coil are positioned are: 28#L1 - 33#L2 - 40#L2 - 45#L2 - 4#L3 - 9#L4 - 16#L4 - 21#L4 - 29#L5 - 34#L6 - 41#L6 - 46#L6 - 5#L7 - 10#L8 - 17#L8 - 22#L8 - 28#L8 - 23#L7 - 16#L7 - 11#L7 - 4#L6 - 47#L5 - 40#L5 - 35#L5 - 27#L4 - 22#L3 - 15#L3 - 10#L3 - 3#L2 - 46#L1 - 39#L1 - 34#L1.
